# EUROPEAN PATENT SPECIFICATION

(11) **EP 3 653 588 B1**
(45) Date of publication and mention of the grant of the patent: **07.02.2024**
(21) Application number: 19206997.9
(22) Date of filing: 04.11.2019
(51) Int. Cl.: C02F 11/02, C02F 11/121, C02F 3/12, C02F 3/34

(54) **SEWAGE TREATMENT PROCESS**
ABWASSERBEHANDLUNGSVERFAHREN
PROCÉDÉ DE TRAITEMENT DES EAUX USÉES

(30) Priority: 07.11.2018 JP 2018209391; 17.12.2018 JP 2018235072; 16.08.2019 JP 2019149267; 16.08.2019 JP 2019149266
(43) Date of publication of application: 20.05.2020
(60) Divisional application: 22202324.4
(73) Proprietor: Kyogyoku Engineering Co., Ltd., Tokushima-City Tokushima (JP)
(72) Inventor: MATSUI, Saburou, Kyoto-City, Kyoto Ukyou-ku (JP); SUGIHARA, Takafumi, Kyoto-City, Kyoto Ukyou-ku (JP)
(74) Representative: Jacobacci Coralis Harle

(56) References cited:
- JP-A- H09 187 779
- JP-A- 2010 082 590
- US-A1- 2012 085 703
- US-A1- 2015 353 394
- Anonymous: "FREE-FLOW (TM) Biological Drain Maintenance Systems", , 31 December 2012 (2012-12-31), XP055678931, Retrieved from the Internet: URL:https://www.chemaqua.com/Portals/CA/Li nked_Documents/Brochures/Wastewater/Chem-A qua_FREE_FLOW_Brochure.pdf [retrieved on 2020-03-23]
- Emmanuel Kafui Abu-Danso: "BIOAUGMENTATION OF AN ACTIVATED SLUDGE PROCESS", , 30 November 2015 (2015-11-30), XP055678937, Retrieved from the Internet: URL:https://epublications.uef.fi/pub/urn_n bn_fi_uef-20160002/urn_nbn_fi_uef-20160002 .pdf [retrieved on 2020-03-23]

## Description

### TECHNICAL FIELD

The The present invention relates to a sewage treatment process according to claim 1.

The sewage treatment process of the present invention makes it possible to, e.g., prevent degradation of the sewer conduit downstream of the relay pump station.

### BACKGROUND ART

As a method of treating a treatment target liquid such as drainage or sewage, activated sludge treatment for treating the treatment target liquid by means of activated sludge has been widely conducted.

For example, as widely disclosed in JP 2013-233482A and others, a wastewater treatment system using an activated sludge method basically comprises an initial sedimentation pond (which can be omitted in a small-scale sewage treatment system), a reaction vessel, and a final sedimentation pond. The wastewater treatment system is operable, according to activated sludge method, to: in the initial sedimentation pond separate, separate crude sludge from wastewater supplied thereto; in the reaction vessel, dissolve oxygen in the resulting wastewater supplied thereto via a flow passage, by means of aeration, and simultaneously cause activated sludge mainly comprised of aerobic microbes (microorganisms) to be suspended in the wastewater with oxygen by means of stirring/mixing; then, in the final sedimentation pond, precipitate the activated sludge supplied thereto via a flow passage; and discharge supernatant water as final effluent from the final sedimentation pond. The reaction vessel is also sometimes referred to as "aeration vessel", "reaction tank", "aeration tank" or "biological treatment vessel", and an aeration time period is in the range of 6 to 14 hours. A part of the activated sludge precipitated in the final sedimentation pond is returned as return sludge to the reaction vessel again, and the remaining activated sludge is condensed as surplus sludge in a mechanical condensing facility.

Although a part of the activated sludge precipitated in the final sedimentation pond is effectively used in the above manner, the technical idea of this Patent Document does not go beyond the scope of this teaching.

Meanwhile, sewage discharged from a sewage source including homes and/or industrial plants/companies flows into a sewer conduit from moment to moment. In this process, human intestinal bacteria and/or microbes (mainly bacteria) from industrial plants flow into the sewer conduit together with the sewage. Generally, during the course of flowing down through the sewer conduit, the sewage is likely to become an oxygen-free state, because, although the sewage takes in oxygen from the air, the microbes consume oxygen more than the taken-in oxygen. As a result, the activity of sulfate-reducing bacteria as anaerobic bacteria becomes active, so that the sulfate-reducing bacteria decompose organic substances using sulfate to generate hydrogen sulfide gas. The generated hydrogen sulfide gas is a cause of bad smell from sewage, and is toxic gas which is dangerous when a worker enters a sewer system through a manhole. Besides, if the hydrogen sulfide gas is dissolved in a water film existing on an upper region of a wall defining an internal space of the sewer conduit, sulfuric acid-producing bacteria are proliferated, so that sulfuric acid is produced to corrode a cement wall of the sewer conduit, resulting in degradation/breakup of the concrete pipe (sewer conduit). An extension of usable life of the concrete pipe as the basis of a sewer system is a significantly important problem in terms of maintenance of urban infrastructures.

In order to solve such a problem, JP H03-055199B proposes a system in which an oxygenation (oxygen-adding) device is provided at a midway position of a sewer conduit and configured to introduce therein sludge in sewage flowing down through the sewer conduit, and after adding oxygen into the sludge, return the resulting sludge to the sewage flowing down through the sewer conduit again, thereby maintaining a positive dissolved oxygen concentration of the sewage.

Although it is true that the system described in this Patent Document is capable of maintaining a positive dissolved oxygen concentration of the sewage in the sewer conduit, the technical idea thereof does not go beyond the scope of this teaching.

Other processes are known from US 2015/353394 A1 and US 2012/085703 A1.

### CITATION LIST

Patent Document 1: JP 2013-233482A
Patent Document 2: JP H03-055199B

### SUMMARY OF INVENTION

### [Technical Problem]

It is therefore an object of the present invention to advance one more step, i.e., provide a process using a sewage treatment system capable of maintaining a positive dissolved oxygen concentration of sewage flowing down through a sewer conduit downstream of a relay pump station, and changing a microbial state on an inner wall of the sewer conduit to prevent corrosion of the sewer conduit.

It is another object of the present invention to provide a process using a sewage treatment system comprising a microbial material production device for treating activated sludge to produce a microbial material capable of further effectively acting in a biological treatment vessel.

### [Solution to Technical Problem]

The above objects can be achieved by a process using a sewage treatment system of the present invention according to claim 1.

### [Effect of Invention]

In the sewage treatment process of the present invention, the microbial material production device is provided, wherein the dehydrated sludge including the surplus sludge from the initial sedimentation pond and/or the return sludge from the final sedimentation pond is treated by the microbial material production device, to produce the microbial material containing aerobic microbial spores, and the microbial material is supplied in its activated state to the sewage in the relay pump station. Thus, it becomes possible to improve bacterial conditions on a wall surface of a sewer conduit immediately downstream of the relay pump station, thereby preventing corrosion of the sewer conduit to extend the usable life of the sewer conduit.

In the sewage treatment process of the present invention, the microbial material production device is provided to enable microbes useful for sewage treatment to exist mainly in the form of spores, and the spores of the microbial material produced by the microbial material production are germinated by the microbe activation device, to establish a state in which Gram-positive bacteria belonging to the class Bacilli in the phylum Firmicutes and/or Gram-positive bacteria belonging to the class Actinobacteria in the phylum Actinobacteria and/or Gram-positive bacteria in the phylum Chloroflexi, which are microbes useful for decomposition of organic substances in the sewage, are richly contained in the sewage. As above, treatment in the biological treatment vessel can be conducted by activated sludge and the microbes from the microbe activation device, so that it is possible to significantly efficiently decompose and treat organic substances in sewage sludge.

Generally, a bacterial phase of the activated sludge most commonly consists of bacteria in the phylum Proteobacteria, the phylum Bacteroidetes or the like. In the sewage treatment system of the present invention, Gram-positive bacteria belonging to the class Bacilli in the phylum Firmicutes, Gram-positive bacteria belonging to the class Actinobacteria in the phylum Actinobacteria and Gram-positive bacteria in the phylum Chloroflexi exist richly in the microbial material (e.g., microbes in the microbial material comprise slightly more than 50% of bacteria in the class Actinobacteria, slightly more than 20% of bacteria in the phylum Firmicutes, and slightly more than 10% of bacteria in the phylum Chloroflexi). Thus, in the activated sludge of the biological treatment vessel, the number of the bacteria in the phylum Proteobacteria, the phylum Bacteroidetes or the like is reduced. Further, even if the biological treatment vessel is operated under the condition that the concentration of MLSS (mixed liquor suspended solid) rises to 2000 to 4000 g/L, the activated sludge exhibits a good sedimentation property, so that it is purified and treated under a stable reduction in BOD (biological oxygen demand). This was effective for all the conventional technical problems, i.e., (1) improvement to bulking problem, (2) improvement to nitrification and denitrification, (3) improvement to dephosphorization treatment, and (4) improvement to bubble release and scum in the final sedimentation pond.

### BRIEF DESCRIPTION OF DRAWINGS

FIG. 1 is a conceptual diagram showing the configuration of a sewage treatment system according to a first embodiment not according to the present invention.
FIG. 2 is a conceptual diagram showing the configuration of a sewage treatment system according to a second embodiment to be used in a process according to the present invention.

### DESCRIPTION OF EMBODIMENTS

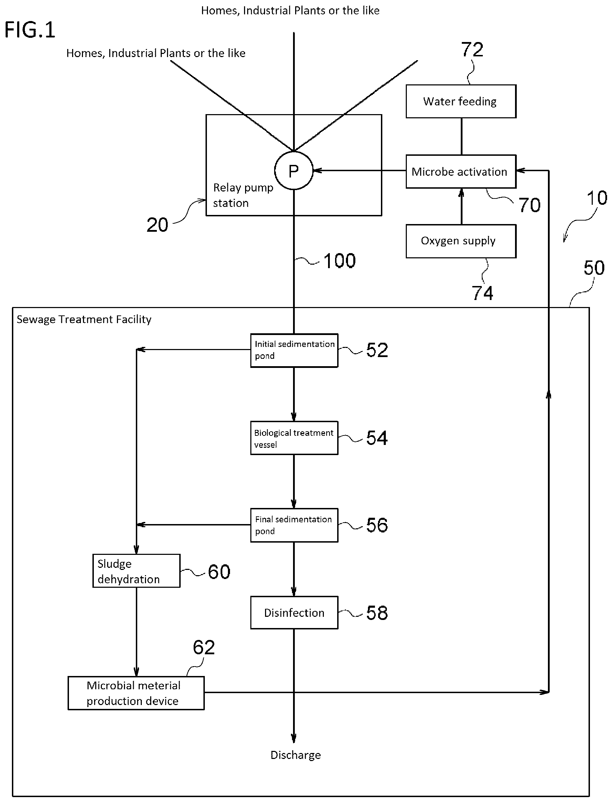

With reference to FIG. 1, a sewage treatment system 10 according to a first embodiment not according to the present invention will now be described.

The sewage treatment system 10 comprises a relay pump station 20 for sewage discharged from a sewage source including homes and/or industrial plants/companies, and a sewage treatment facility 50 configured to receive the sewage from the relay pump station 20 via a sewer conduit 100 and treat the received sewage. As with the conventional sewage treatment facility using the activated sludge method, the sewage treatment facility 50 comprises an initial sedimentation pond 52, a biological treatment vessel (aeration vessel) 54, a final sedimentation pond 56 and a disinfection vessel 58, which are arranged in this order along an upstream-to-downstream direction. The sewage is purified and disinfected through the sewage treatment facility 50, and discharged via a sewer conduit. The above configuration of the sewage treatment facility 50 is commonly used in this type of sewage treatment system, and therefore any further detailed description thereof will be omitted. Here, the relay pump station 20 is equipped with a pump P connected to a sewer conduit extending from the sewage source including homes and/or industrial plants/companies.

The sewage treatment system 10 further comprises a dehydration device 60 connected to the initial sedimentation pond 52 and the final sedimentation pond 56 and configured to receive surplus sludge from the initial sedimentation pond and return sludge from the final sedimentation pond and dehydrate the received surplus sludge and the received return sludge. Alternatively, this dehydration device 60 may be configured to receive one of the surplus sludge and the return sludge and dehydrate the received surplus or return sludge. The dehydration device 60 may be configured to perform any type of dehydration method, such as a centrifugal separation type, a filter press type or a machine concentration type. The dehydration device 60 is operable to dehydrate the surplus sludge and/or the return sludge to form dehydrated sludge having a moisture content of 65 to 85%.

The dehydration device 60 is connected to a microbial material production device 62. This microbial material production device 62 is configured to supply oxygen to the dehydrated sludge received from the dehydration device 60 while maintaining the temperature of the dehydrated sludge within the range of 60°C to 110°C, to subject the dehydrated sludge to aerobic fermentation using Gram-positive aerobic microbes in the dehydrated sludge. As a result of the aerobic fermentation, Gram-negative anaerobic and facultative anaerobic microbes in the dehydrated sludge are decomposed and extinguished, and the aerobic microbes become endospores or spores due to consumption/depletion of water and nutrients in the dehydrated sludge through the aerobic fermentation. By utilizing this phenomenon, a microbial material is produced which contains the harmful Gram-negative anaerobic and facultative anaerobic microbes as little as possible, and contains the useful aerobic microbial spores. The microbial material production device 62 is equipped with a heater for the aforementioned temperature control, and, if needed, an oxygen (air) supply unit.

It should be noted here that, although there is a conventional technique (see JP 2001-271510A) in which a fermented product substantially equivalent to the microbial material in the present invention (for a fertilizer) is directly added to sewage sludge, an object thereof is to promote sedimentation of activated sludge, which is different from the object of the present invention. Further, from the conventional technique, it is conceivable to directly add the above fermented product into the biological treatment vessel. However, in the biological treatment vessel, there are many other microbes (Gram-negative bacteria, etc.) consuming nutrients at a higher priority, and thereby nutrients or the like required for germination of the spores deplete or run low, so that the spores directly added into the biological treatment vessel fail to germinate or need to take a long period of time for germination. Therefore, fulfillment of a sewage treating function of the useful microbes is considered to be limited.

The sewage treatment system 10 according to this embodiment further comprises a microbe activation device 70 provided in or connected to the relay pump station 20. This microbe activation device 70 is connected with water feeding means 72 configured to feed water from any part of the sewage treatment system to the microbe activation device 70, and oxygen supply means 74 configured to feed oxygen to the microbe activation device 70. As the water to be supplied from the water feeding means 72, it is preferable to use sewage before being subjected to the sewage treatment (e.g., sewage upstream of the pump P of the relay pump station 20), or water after flowing out of the final sedimentation pond 56 and before entering the disinfection vessel 58. Such water contains nutrients required for germination of the spores, so that it is possible to simultaneously provide water and nutrients required for germination of the spores.

The oxygen to be supplied from the oxygen supply means 74 may be supplied in the form of air. In this case, it is not necessary to particularly provide an oxygen generator or an oxygen tank. Further, in a case where the oxygen concentration in sewage is considered to be sufficient for germination of the spores, air may be introduced into the sewage in the pump P or the sewage immediately after being discharged from the pump P.

The microbe activation device 70 is configured to receive the microbial material from the microbial material production device 62, and supply the water from the water feeding means 72 to the received microbial material, while maintaining the temperature and the oxygen concentration of the water, respectively, within the range of 10°C to 40°C, and within the range of 1 to 10 mg/L, thereby germinating the spores of the microbial material to activate the microbial material. The microbe activation device 70 may be equipped with a cooling and heating unit for maintaining the water temperature within the above range. Further, in order to maintain the oxygen concentration within the above range, the microbe activation device 70 is configured to receive supply of oxygen (air) from the oxygen supply means 74. The oxygen (air) from the oxygen supply means 74 is also supplied to the sewage at any position of the relay pump station 20 to increase a dissolved oxygen amount in the sewage. Here, generally, it takes 5 minutes or more after a germination environment is established, to cause germination of the spores in the microbe activation device 70. Thus, it is preferable to put the microbial material into the sewage (e.g., sewage in the pump) after retaining the microbial material in the microbe activation device 70 for 5 minutes or more.

Based on the above configuration, in the sewage treatment system 10, the sewage flowing through the sewer conduit downstream of the relay pump station 20 is placed in a state in which sufficient oxygen is dissolved therein (the oxygen concentration thereof is increased), despite consumption of oxide by the germinated aerobic microbes and aerobic microbes originally existing in the sewage.

As a result of an increase in the oxygen concentration of the sewage, sulfate-reducing bacteria as anaerobic bacteria are deactivated to suppress production of hydrogen sulfide, so that it is possible to prevent production of sulfuric acid by suppression of the sulfuric acid-producing bacteria, and improve bacterial conditions in a biofilm on a wall surface of the sewer conduit extending from a position immediately downstream of the relay pump station, to achieve a good state in which there is no sulfuric acid-producing bacteria. This makes it possible to prevent generation of sulfuric acid and thus prevent corrosion of the sewer conduit to extend the usable life of the sewer conduit, and to purify the sewage itself by activity of the aerobic microbes to reduce a burden on a subsequent facility.

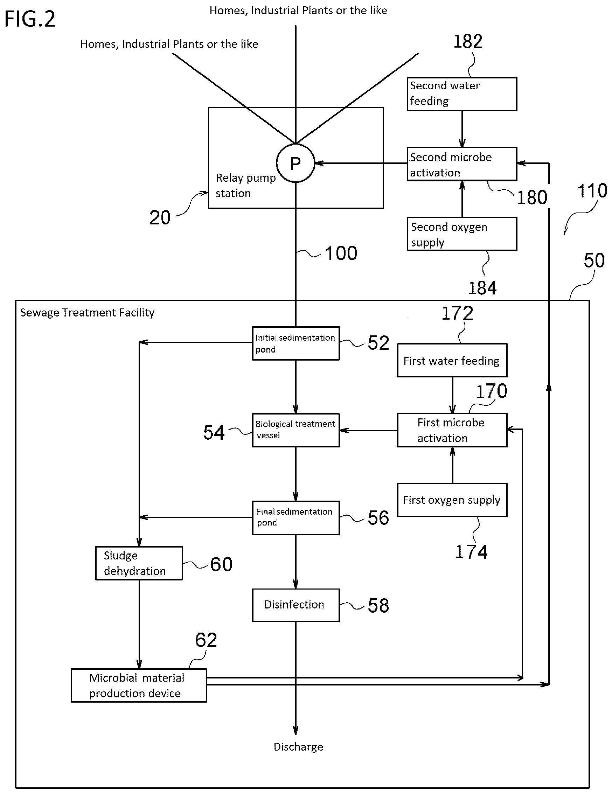

Next, with reference to FIG. 2, a sewage treatment system 110 according to a second embodiment to be used in a process according to the present invention will be described. Description about the same element or component in the first embodiment described with reference to FIG. 1 will be omitted.

The sewage treatment system 110 comprises a first microbe activation device 170 provided in or connected to the sewage treatment facility 50. This first microbe activation device 170 is connected with first water feeding means 172 configured to feed water from any part of the sewage treatment system to the first microbe activation device 170. The first microbe activation device 170 is connected with the first oxygen supply means 174 configured to feed oxygen to the first microbe activation device 170, when needed. As the water to be supplied from the water feeding means 172, it is preferable to use sewage before being subjected to the sewage treatment (e.g., sewage upstream of the pump P of the relay pump station 20), or water after flowing out of the final sedimentation pond 56 and before entering the disinfection vessel 58. Such water contains nutrients required for germination of the spores, so that it is possible to simultaneously provide water and nutrients required for germination of the spores.

In a case where a dissolved oxygen amount in the water from the first water feeding means 172 is insufficient, oxygen is supplied from the first oxygen supply means 174. The oxygen to be supplied from the first oxygen supply means 174 may be supplied in the form of air. In this case, it is not necessary to particularly provide an oxygen generator or an oxygen tank.

The first microbe activation device 170 is configured to receive the microbial material from the microbial material production device 62, and supply the water from the water feeding means 172 to the received microbial material, while maintaining the temperature and the oxygen concentration of the water, respectively, within the range of 15°C to 40°C, and within the range of 1 to 10 mg/L, thereby germinating the spores of the microbial material to activate the microbial material. The first microbe activation device 170 may be equipped with a cooling and heating unit for maintaining the water temperature within the above range. Further, in order to maintain the oxygen concentration within the above range, the first microbe activation device 170 is configured to receive supply of oxygen (air) from the first oxygen supply means 174. Here, it takes 5 minutes or more after a germination environment is established, to cause germination of the spores in the first microbe activation device 170. Thus, it is preferable to put the microbial material into the biological treatment vessel 54 after retaining, for 5 minutes or more, the microbial material in the microbe activation device 70 which contains Gram-negative bacteria conflicting with the microbial material, as little as possible.

Based on the above configuration, in the sewage treatment system 110, (aerobic) microbes as a result of germination of the spores in the microbial material from the microbial material production device 62 are additionally supplied to normal activated sludge in the biological treatment vessel 54 to efficiently decompose organic substances of the sewage in cooperation with useful microbes in the activated sludge.

In the first embodiment, for example, the aerobic microbes may include Gram-positive bacteria belonging to the class Bacilli in the phylum Firmicutes, and/or Gram-positive bacteria belonging to the class Actinobacteria in the phylum Actinobacteria, and optionally further include yeasts.

On the other hand, the anaerobic and facultative anaerobic microbes may include gut-dwelling Gram-negative sulfate-reducing bacteria in the phylum Proteobacteria, and/or Gram-negative bacteria in the phylum Bacteroidetes.

The sewage treatment system 110 further comprises a second microbe activation device 180 provided in or connected to the relay pump station 20. This microbe activation device 180 is connected with second water feeding means 182 configured to feed water from any part of the sewage treatment system to the second microbe activation device 180, and second oxygen supply means 184 configured to feed oxygen to the second microbe activation device 180. As the water to be supplied from the second water feeding means 182, it is preferable to use sewage before being subjected to the sewage treatment (e.g., sewage upstream of the pump P of the relay pump station 20), or water after flowing out of the final sedimentation pond 56 and before entering the disinfection vessel 58. Such water contains nutrients required for germination of the spores, so that it is possible to simultaneously provide water and nutrients required for germination of the spores.

The oxygen to be supplied from the second oxygen supply means 184 may be supplied in the form of air, as with the first oxygen supply means 174. In this case, it is not necessary to particularly provide an oxygen generator or an oxygen tank. Further, in a case where the oxygen concentration in sewage is considered to be sufficient for germination of the spores, air may be introduced into the sewage in the pump P or the sewage immediately after being discharged from the pump P.

As with the first microbe activation device 170, the second microbe activation device 180 is configured to receive the microbial material from the microbial material production device 62, and supply the water from the second water feeding means 182 to the received microbial material, while maintaining the temperature and the oxygen concentration of the water, respectively, within the range of 15°C to 40°C, and within the range of 1 to 10 mg/L, thereby germinating the spores of the microbial material to activate the microbial material. The microbe activation device 70 may be equipped with a cooling and heating unit for maintaining the water temperature within the above range. Further, in order to maintain the oxygen concentration within the above range, the second microbe activation device 180 is configured to receive supply of oxygen (air) from the second oxygen supply means 184. The oxygen (air) from the second oxygen supply means 184 is also supplied to the sewage at any position of the relay pump station 20 to increase a dissolved oxygen amount in the sewage. Here, generally, it takes 5 minutes or more after a germination environment is established, to cause germination of the spores in the second microbe activation device 180. Thus, it is preferable to put the microbial material into the sewage (e.g., sewage in the pump) after retaining the microbial material in the second microbe activation device 180 for 5 minutes or more, as described in connection with the first microbe activation device 170.

Based on the above configuration, in the sewage treatment system 110, the sewage flowing through the sewer conduit downstream of the relay pump station 20 is placed in a state in which sufficient oxygen is dissolved therein (the oxygen concentration thereof is increased), despite consumption of oxide by the germinated aerobic microbes and aerobic microbes originally existing in the sewage.

As a result of an increase in the oxygen concentration of the sewage, sulfate-reducing bacteria as anaerobic bacteria are deactivated to suppress production of hydrogen sulfide, so that it is possible to prevent production of sulfuric acid by suppression of the sulfuric acid-producing bacteria, and improve bacterial conditions in a biofilm on a wall surface of the sewer conduit extending from a position immediately downstream of the relay pump station, to achieve a good state. This makes it possible to prevent generation of sulfuric acid and thus prevent corrosion of the sewer conduit to extend the usable life of the sewer conduit, and to purify the sewage itself by activity of the aerobic microbes to reduce a burden on a subsequent facility.

In the second embodiment, the aerobic microbes may include Gram-positive bacteria belonging to the class Bacilli in the phylum Firmicutes, and Gram-positive bacteria belonging to the class Actinobacteria in the phylum Actinobacteria, and may further include Gram-positive bacteria in the phylum Chloroflexi, and optionally include yeasts.

On the other hand, the anaerobic and facultative anaerobic microbes may include gut-dwelling Gram-negative sulfate-reducing bacteria in the phylum Proteobacteria, and/or Gram-negative bacteria in the phylum Bacteroidetes.

### LIST OF REFERENCE SIGNS

10: sewage treatment system
20: relay pump station
50: sewage treatment facility
52: initial sedimentation pond
54: biological treatment vessel
56: final sedimentation pond
58: disinfection vessel
60: dehydration device
62: microbial material production device
70: microbe activation device
72: water feeding means
74: oxygen supply means
100: sewer conduit
170: first microbe activation device
172: first water feeding means
174: first oxygen supply means
180: second microbe activation device
182: second water feeding means
184: second oxygen supply means
P: pump

## Claims

1. A sewage treatment process using a sewage treatment system (10) comprising
a relay pump station (20) for sewage discharged from a sewage source including homes, offices and/or industrial plants/companies/ public organizations;
a sewage treatment facility (50) configured to receive the sewage from the relay pump station via a sewer conduit (100) and treat the received sewage, wherein the sewage treatment facility comprises a biological treatment vessel (54) and a final sedimentation pond (56) which are arranged in this order along an upstream-to-downstream direction, and optionally further comprises an initial sedimentation pond (52) disposed upstream of the biological treatment vessel;
dehydration means (60) connected to the final sedimentation pond and optionally the initial sedimentation pond, and configured to receive return sludge from the final sedimentation pond and optionally surplus sludge from the initial sedimentation pond, dehydrate the received return sludge and optionally the received surplus sludge;
a microbial material production device (62) configured to supply oxygen to the dehydrated sludge received from the dehydration means while maintaining a temperature of the dehydrated sludge within the range of 60°C to 110°C, to subject the dehydrated sludge to aerobic fermentation using Gram-positive aerobic microbes in the dehydrated sludge, thereby producing a microbial material in which Gram-negative anaerobic and facultative anaerobic microbes are decomposed and extinguished and which contains aerobic microbial endospores or spores produced after the aerobic fermentation;
first water feeding means (172) configured to feed water from any part of the sewage treatment system to the after-mentioned first microbe activation device;
first oxygen supply means (174) configured to supply oxygen to the after-mentioned first microbe activation device;
a first microbe activation device (170) configured to: receive the microbial material from the microbial material production device; receive supply of the oxygen from the first oxygen supply means and supply of the water from the first water feeding means, while maintaining a temperature and an oxygen concentration of the water, respectively, within the range of 10°C to 40°C, and within the range of 1 to 10 mg/L, thereby germinating the spores of the microbial material to activate the microbial material; and supply the activated microbial material to the biological treatment vessel;
second water feeding means (182) configured to feed water from any part of the sewage treatment system to the after-mentioned second microbe activation device;
second oxygen supply means (184) configured to supply oxygen to the after-mentioned second microbe activation device;
a second microbe activation device (180) configured to: receive the microbial material from the microbial material production device; receive supply of the oxygen from the second oxygen supply means and supply of the water from the second water feeding means, while maintaining a temperature and an oxygen concentration of the water, respectively, within the range of 10°C to 40°C, and within the range of 1 to 10 mg/L, thereby germinating the spores of the microbial material to activate the microbial material; and supply the activated microbial material to the relay pump station,
and wherein the sewage treatment process comprises:
a dehydration step for dehydrating the received return sludge and optionally the received surplus sludge,
a microbial material production step for producing the microbial materials by supplying oxygen to the dehydrated sludge, maintaining a temperature of the dehydrated sludge within the range of 60°C to 110°C, to subject the dehydrated sludge to aerobic fermentation using Gram-positive aerobic microbes in the dehydrated sludge, thereby producing a microbial material in which Gram-negative anaerobic, facultative aerobic microbes in the dehydrated sludge are decomposed and extinguished, and which contains endospores or spores of the aerobic microbes produced after the aerobic fermentation, which aerobic microbes include Gram-positive bacteria belonging to the class Bacilli in the phylum Firmicutes and Gram-positive bacteria belonging to the class Actinobacteria in the phylum Actinobacteria,
a first microbial material supply step for supplying the microbial material from the microbial material production device to the first microbe activation device,
a first microbe activation step for germinating the spores and endospores of the microbial material to activate the microbial material by receiving supply of the oxygen from the first supply means and supply of the water from the first water feeding means, and maintaining a temperature and an oxygen concentration of the water, respectively, within the range of 10°C to 40°C, and within the range of 1 to 10 mg/L,
an activated microbial material supply step for supplying the activated microbial material from the first microbe activation device to the biological treatment vessel so as to treat the sewage in the biological treatment vessel,
a second microbial material supply step for supplying the microbial material from the microbial material production device to the second microbe activation device,
a second microbe activation step for germinating the spores and endospores of the microbial material to activate the microbial material in the second microbe activation device by receiving supply of the oxygen from the second oxygen supply means and supply of the water from the second water feeding means by the second microbe activation device, and maintaining a temperature and an oxygen concentration of the water, respectively, within the range of 10°C to 40°C, and within the range of 1 to 10 mg/L, and
an activated microbial material supply step for supplying the activated microbial material from second microbe activation device to the relay pump station so as to purify the sewage itself by activity of the aerobic microbes to reduce a burden on a subsequent facility.

2. The sewage treatment process according to claim 1, wherein the water from the first water feeding means is water treated by the sewage treatment facility, water before the disinfection by a the disinfection vessel, if the sewage treatment facility comprises a disinfection vessel configured to disinfect water from the final sedimentation pond, and/or sewage upstream of a pump of the relay pump station.

3. The sewage treatment process according to claim 1 or 2, wherein the water from the first water feeding means contains nutrients required for germination of the spores.

4. The sewage treatment process according to any one of the preceding claims 1 to 3, wherein the aerobic microbes include Gram-positive bacteria belonging to the class Chloroflexales in the phylum Chloroflexi.

5. The sewage treatment process according to claim 1, wherein, when the sewage treatment facility comprises the initial sedimentation pond, the water to be supplied to the first and second microbe activation device is overflow from the initial sedimentation pond, the sewage before entering the initial sedimentation pond, water treated by the sewage treatment facility, and/or water before the disinfection by a disinfection vessel, if the sewage treatment facility comprises a disinfection vessel configured to disinfect water from the final sedimentation pond.

6. The sewage treatment process according to any one of the preceding claims 1 to 5, wherein the water from the first and second water feeding means contains nutrients required for germination of the spores.

7. The sewage treatment process according to claim 1, 5 or 6, wherein a temperature of the water from the first and second water feeding means is maintained within the range of 15°C to 40°C.

8. The sewage treatment process according to any one of the preceding claims 1, 5, 6 or 7, wherein the second oxygen supply means is configured to supply oxygen into the sewage in the pump or the sewage immediately after being discharged from the pump in a case where the oxygen concentration in sewage is considered to be sufficient for germination of the spores, air may be introduced.

9. The sewage treatment process according to any one of the preceding claims 1 to 8, wherein the oxygen from the first and the second oxygen supply means is supplied in the form of air.

10. The sewage treatment process according to any one of the preceding claims 1 to 9, wherein the microbial material contains decomposed organic matter.

## Patentansprüche

1. Abwasserbehandlungsverfahren unter Verwendung eines Abwasserbehandlungssystems (10) umfassend:
eine Relais-Pumpstation (20) für aus einer Abwasserquelle einschließlich Haushalte, Büros und/oder Industrieanlagen/Unternehmen/öffentliche Organisationen ausgestoßenes Abwasser;
eine Abwasserbehandlungsanlage (50), gestaltet zum Erhalten des Abwassers von der Relais-Pumpstation über eine Abwasserleitung (100) und Behandeln des erhaltenen Abwassers, wobei die Abwasserbehandlungsanlage ein Gefäß zur biologischen Behandlung (54) und ein Endabsetzbecken (56) umfasst, die in dieser Reihenfolge in einer stromaufwärts-zu-stromabwärts-Richtung angeordnet sind, und gegebenenfalls ferner ein Anfangsabsetzbecken (52) umfasst, das stromaufwärts bezogen auf das Gefäß zur biologischen Behandlung angeordnet ist;
Entwässerungsmittel (60), die mit dem Endabsetzbecken und gegebenenfalls dem Anfangsabsetzbecken verbunden sind und dafür gestaltet sind, Rücklaufschlamm von dem Endabsetzbecken und gegebenenfalls Überschussschlamm von dem Anfangsabsetzbecken zu erhalten, den erhaltenen Rücklaufschlamm und gegebenenfalls den erhaltenen Überschussschlamm zu entwässern;
eine Produktionsvorrichtung für mikrobielles Material (62), gestaltet zum Zuführen von Sauerstoff zu dem entwässerten Schlamm, der von der Entwässerungseinrichtung erhalten wird, wobei eine Temperatur des entwässerten Schlamms in einem Bereich von 60 °C bis 110 °C gehalten wird, um den entwässerten Schlamm aerober Fermentation unter Verwendung von Gram-positiven aeroben Mikroben in dem entwässerten Schlamm zu unterwerfen, um dadurch ein mikrobielles Material zu erzeugen, in dem Gram-negative anaerobe und optionale anaerobe Mikroben zersetzt und beseitigt sind und das aerobe mikrobielle Endosporen oder Sporen enthält, die nach der aeroben Fermentation erzeugt werden;
erste Wasserzuführmittel (172), gestaltet zum Zuführen von Wasser von einem beliebigen Teil des Abwasserbehandlungssystems zu der nachstehend genannten ersten Mikrobenaktivierungsvorrichtung;
erste Sauerstoffzuführmittel (174), gestaltet zum Zuführen von Sauerstoff zu der nachstehend genannten ersten Mikrobenaktivierungsvorrichtung;
eine erste Mikrobenaktivierungsvorrichtung (170), gestaltet zum: Erhalten des mikrobiellen Materials von der Produktionsvorrichtung für mikrobielles Material; Erhalten der Sauerstoffzufuhr von dem ersten Sauerstoffzuführmittel und der Wasserzufuhr von dem ersten Wasserzuführmittel, wobei eine Temperatur und eine Sauerstoffkonzentration des Wassers in dem Bereich von 10 °C bis 40 °C bzw. in dem Bereich von 1 bis 10 mg/l gehalten wird, um dadurch die Sporen des mikrobiellen Materials zu keimen, um das mikrobielle Material zu aktivieren; und Zuführen des aktivierten mikrobiellen Materials zu dem Gefäß zur biologischen Behandlung;
zweite Wasserzuführmittel (182), gestaltet zum Zuführen von Wasser von einem beliebigen Teil des Abwasserbehandlungssystems zu der nachstehend genannten zweiten Mikrobenaktivierungsvorrichtung;
zweite Sauerstoffzuführmittel (184), gestaltet zum Zuführen von Sauerstoff zu der nachstehend genannten zweiten Mikrobenaktivierungsvorrichtung;
eine zweite Mikrobenaktivierungsvorrichtung (180), gestaltet zum: Erhalten des mikrobiellen Materials von der Produktionsvorrichtung für mikrobielles Material; Erhalten der Sauerstoffzufuhr von dem zweiten Sauerstoffzuführmittel und der Wasserzufuhr von dem zweiten Wasserzuführmittel, wobei eine Temperatur und eine Sauerstoffkonzentration des Wassers in dem Bereich von 10 °C bis 40 °C bzw. in dem Bereich von 1 bis 10 mg/l gehalten wird, um dadurch die Sporen des mikrobiellen Materials zu keimen, um das mikrobielle Material zu aktivieren; und Zuführen des aktivierten mikrobiellen Materials zu der Relais-Pumpstation,
und wobei das Abwasserbehandlungsverfahren umfasst:
einen Entwässerungsschritt zum Entwässern des erhaltenen Rücklaufschlamms und gegebenenfalls des erhaltenen Überschussschlamms,
einen Schritt der Herstellung von mikrobiellem Material zum Herstellen des mikrobiellen Materials durch Zuführen von Sauerstoff zu dem entwässerten Schlamm, Halten einer Temperatur des entwässerten Schlamms in dem Bereich von 60 °C bis 110 °C, um den entwässerten Schlamm aerober Fermentation unter Verwendung von Gram-positiven aeroben Mikroben in dem entwässerten Schlamm zu unterwerfen, um dadurch ein mikrobielles Material zu erzeugen, in dem Gram-negative anaerobe und optionale anaerobe Mikroben in dem entwässerten Schlamm zersetzt und beseitigt sind und das Endosporen oder Sporen der aeroben Mikroben enthält, die nach der aeroben Fermentation erzeugt werden, wobei aerobe Mikroben Gram-negative Bakterien, die zu der Klasse Bacilli in dem Stamm Firmicutes gehören, und Gram-positive Bakterien, die zu der Klasse Actinobacteria in dem Stamm Actinobacteria gehören, einschließen,
einen ersten Zuführschritt von mikrobiellem Material zum Zuführen des mikrobiellen Materials von der Produktionsvorrichtung für mikrobielles Material zu der ersten Mikrobenaktivierungsvorrichtung,
einen ersten Mikrobenaktivierungsschritt zum Keimen der Sporen und Endosporen des mikrobiellen Materials zum Aktivieren des mikrobiellen Materials durch Erhalten der Sauerstoffzufuhr von dem ersten Sauerstoffzuführmittel und der Wasserzufuhr von dem ersten Wasserzuführmittel und Halten einer Temperatur und einer Sauerstoffkonzentration des Wassers in dem Bereich von 10 °C bis 40 °C bzw. in dem Bereich von 1 bis 10 mg/l,
einen Zuführschritt von aktiviertem mikrobiellem Material zum Zuführen des aktivierten mikrobiellen Materials von der ersten Mikrobenaktivierungsvorrichtung zu dem Gefäß für biologische Behandlung, um das Abwasser in dem Gefäß für biologische Behandlung zu behandeln,
einen zweiten Zuführschritt von mikrobiellem Material zum Zuführen des mikrobiellen Materials von der Produktionsvorrichtung für mikrobielles Material zu der zweiten Mikrobenaktivierungsvorrichtung,
einen zweiten Mikrobenaktivierungsschritt zum Keimen der Sporen und Endosporen des mikrobiellen Materials zum Aktivieren des mikrobiellen Materials in der zweiten Mikrobenaktivierungsvorrichtung durch Erhalten der Sauerstoffzufuhr von dem zweiten Sauerstoffzuführmittel und der Wasserzufuhr von dem zweiten Wasserzuführmittel durch die zweite Mikrobenaktivierungsvorrichtung und Halten einer Temperatur und einer Sauerstoffkonzentration des Wassers in dem Bereich von 10 °C bis 40 °C bzw. in dem Bereich von 1 bis 10 mg/l, und
einen Zuführschritt von aktiviertem mikrobiellem Material zum Zuführen des aktivierten mikrobiellen Materials von der zweiten Mikrobenaktivierungsvorrichtung zu der Relais-Pumpstation, um das Abwasser selbst durch die Aktivität der aeroben Mikroben zu reinigen, um eine Last für eine nachfolgende Anlage zu verringern.

2. Abwasserbehandlungsverfahren gemäß Anspruch 1, wobei das Wasser von dem ersten Wasserzuführmittel durch die Abwasserbehandlungsanlage behandeltes Wasser, Wasser vor der Desinfektion durch das Desinfektionsgefäß, falls die Abwasserbehandlungsanlage ein zum Desinfizieren von Wasser aus dem Endsedimentationebecken gestaltetes Desinfektionsgefäß umfasst, und/oder Abwasser von stromaufwärts bezogen auf eine Pumpe der Relais-Pumpstation ist.

3. Abwasserbehandlungsverfahren gemäß Anspruch 1 oder 2, wobei das Wasser aus dem ersten Wasserzuführmittel für das Keinem der Sporen notwendige Nährstoffe enthält.

4. Abwasserbehandlungsverfahren gemäß einem der vorstehenden Ansprüche 1 bis 3, wobei die aeroben Mikroben Gram-positive Bakterien, die zu der Klasse Chloroflexales in dem Stamm Chloroflexi gehören, einschließen.

5. Abwasserbehandlungsverfahren gemäß Anspruch 1, wobei die Abwasserbehandlungsanlage das Anfangsabsetzbecken umfasst, wobei das Wasser, das der ersten und der zweiten Mikrobenaktivierungsvorrichtung zugeführt werden soll, Überlauf aus dem Anfangsabsetzbecken, das Abwasser vor dem Eintreten in das Anfangsabsetzbecken, durch die Abwasserbehandlungsanlage behandeltes Wasser und/oder Wasser vor der Desinfektion durch ein Desinfektionsgefäß, falls die Abwasserbehandlungsanlage ein zum Desinfizieren von Wasser aus dem Endsedimentationebecken gestaltetes Desinfektionsgefäß umfasst, ist.

6. Abwasserbehandlungsverfahren gemäß einem der vorstehenden Ansprüche 1 bis 5, wobei das Wasser aus dem ersten und dem zweiten Wasserzuführmittel für das Keinem der Sporen notwendige Nährstoffe enthält.

7. Abwasserbehandlungsverfahren gemäß Anspruch 1, 5 oder 6, wobei eine Temperatur des Wassers aus dem ersten und dem zweiten Wasserzuführmittel in dem Bereich von 15 °C bis 40 °C gehalten wird.

8. Abwasserbehandlungsverfahren gemäß Anspruch 1, 5, 6 oder 7, wobei das zweite Sauerstoffzuführmittel dafür gestaltet ist, Sauerstoff in das Abwasser in der Pumpe oder das Abwasser unmittelbar nach dem Ausstoßen aus der Pumpe zuzuführen, wobei in dem Fall, dass die Sauerstoffkonzentration in dem Abwasser als ausreichend für die Keimung der Sporen angesehen wird, Luft eingeführt werden kann.

9. Abwasserbehandlungsverfahren gemäß einem der vorstehenden Ansprüche 1 bis 8, wobei der Sauerstoff von dem ersten und dem zweiten Sauerstoffzuführmittel in der Form von Luft zugeführt wird.

10. Abwasserbehandlungsverfahren gemäß einem der vorstehenden Ansprüche 1 bis 9, wobei das mikrobielle Material zersetztes organisches Material enthält.

## Revendications

1. Procédé de traitement des eaux usées utilisant un système de traitement des eaux usées (10), comprenant :
une station de pompage relais (20) pour les eaux usées provenant d'une source d'eaux usées, y compris des habitations, des bureaux et/ou des installations industrielles/entreprises/organismes publics ;
une installation de traitement des eaux usées (50) configurée pour recevoir les eaux usées provenant de la station de pompage relais via un conduit d'égout (100) et pour traiter les eaux usées reçues, où l'installation de traitement des eaux usées comprend une cuve de traitement biologique (54) et un bassin de sédimentation final (56) qui sont disposés dans cet ordre le long d'une direction amont-aval, et comprend en outre facultativement un bassin de sédimentation initial (52) disposé en amont de la cuve de traitement biologique ;
un moyen de déshydratation (60) relié au bassin de sédimentation final et éventuellement au bassin de sédimentation initial, et configuré pour recevoir les boues de retour provenant du bassin de sédimentation final et éventuellement les boues excédentaires provenant du bassin de sédimentation initial, pour déshydrater les boues de retour reçues et éventuellement les boues excédentaires reçues ;
un dispositif de production de matière microbienne (62) configuré pour alimenter en oxygène les boues déshydratées reçues du moyen de déshydratation tout en maintenant les boues déshydratées à une température comprise dans l'intervalle de 60°C à 110°C, pour soumettre les boues déshydratées à une fermentation aérobie en utilisant des microbes aérobies Gram positif dans les boues déshydratées, produisant ainsi une matière microbienne dans laquelle les microbes anaérobies Gram négatif et anaérobies facultatifs sont décomposés et éteints, et qui contient des endospores ou des spores microbiens aérobies produits après la fermentation aérobie ;
un premier moyen d'alimentation en eau (172) configuré pour alimenter le premier dispositif d'activation des microbes mentionné ci-après avec de l'eau provenant de n'importe quelle partie du système de traitement des eaux usées ;
un premier moyen d'alimentation en oxygène (174) configuré pour alimenter en oxygène le premier dispositif d'activation des microbes mentionné ci-après ;
un premier dispositif d'activation des microbes (170) configuré pour : recevoir la matière microbienne provenant du dispositif de production de matière microbienne ; recevoir l'alimentation en oxygène provenant de la première cuve de traitement d'alimentation en oxygène ;
un deuxième moyen d'alimentation en eau (182) configuré pour alimenter le deuxième dispositif d'activation des microbes mentionné ci-après avec de l'eau provenant de n'importe quelle partie du système de traitement des eaux usées ;
un deuxième moyen d'alimentation en oxygène (184) configuré pour alimenter en oxygène le deuxième dispositif d'activation des microbes mentionné ci-après ;
un deuxième dispositif d'activation des microbes (180) configuré pour : recevoir la matière microbienne provenant du dispositif de production de matière microbienne ; recevoir l'alimentation en oxygène provenant du deuxième moyen d'alimentation en oxygène et l'alimentation en eau provenant du deuxième moyen d'alimentation en eau, tout en maintenant une température et une concentration en oxygène de l'eau qui sont, respectivement, comprises dans l'intervalle de 10°C à 40°C et dans l'intervalle de 1 à 10 mg/L, faisant ainsi germer les spores de la matière microbienne pour activer la matière microbienne ; et alimenter la station de pompage relais en matière microbienne activée ;
et où le procédé de traitement des eaux usées comprend :
une étape de déshydratation pour déshydrater les boues de retour reçues et éventuellement les boues excédentaires reçues ;
une étape de production de matières microbiennes pour produire les matières microbiennes en alimentant en oxygène les boues déshydratées, en maintenant les boues déshydratées à une température comprise dans l'intervalle de 60°C à 110°C, pour soumettre les boues déshydratées à une fermentation aérobie en utilisant des microbes aérobies Gram positif dans les boues déshydratées, produisant ainsi une matière microbienne dans laquelle les microbes anaérobies Gram négatif, aérobies facultatifs dans les boues déshydratées sont décomposés et éteints, et qui contient des endospores ou des spores des microbes aérobies produits après la fermentation aérobie, lesquels microbes aérobies comprennent les bactéries Gram positif appartenant à la classe des bacilles de l'embranchement des Firmicutes et les bactéries Gram positif appartenant à la classe des actinobactéries de l'embranchement des Actinobacteria,
une première étape d'alimentation en matières microbiennes pour envoyer la matière microbienne provenant du dispositif de production de matière microbienne vers le premier dispositif d'activation des microbes,
une première étape d'activation des microbes pour faire germer les spores et endospores de la matière microbienne afin d'activer la matière microbienne grâce à l'arrivée de l'alimentation en oxygène provenant du premier moyen d'alimentation et de l'alimentation en eau provenant du premier moyen d'alimentation en eau, et pour maintenir une température et une concentration en oxygène de l'eau respectivement à une valeur comprise dans l'intervalle de 10°C à 40°C et dans l'intervalle de 1 à 10 mg/L,
une étape d'alimentation en matière microbienne activée pour envoyer la matière microbienne activée provenant du premier dispositif d'activation des microbes vers la cuve de traitement biologique de manière à traiter les eaux usées dans la cuve de traitement biologique,
une deuxième étape d'alimentation en matière microbienne pour envoyer la matière microbienne provenant du dispositif de production de matière microbienne vers le deuxième dispositif d'activation des microbes,
une deuxième étape d'activation des microbes pour faire germer les spores et endospores de la matière microbienne et activer la matière microbienne dans le deuxième dispositif d'activation des microbes grâce à l'arrivée de l'alimentation en oxygène provenant du deuxième moyen d'alimentation en oxygène et de l'alimentation en eau provenant du deuxième moyen d'alimentation en eau par le deuxième dispositif d'activation des microbes, et pour maintenir une température et une concentration en oxygène de l'eau respectivement à une valeur comprise dans l'intervalle de 10°C à 40°C et dans l'intervalle de 1 à 10 mg/L, et
une étape d'alimentation en matière microbienne activée pour envoyer la matière microbienne activée provenant du deuxième dispositif d'activation des microbes vers la station de pompage relais de manière à purifier les eaux usées proprement dites grâce à l'activité des microbes aérobies afin de réduire la charge pesant sur une installation ultérieure.

2. Procédé de traitement des eaux usées selon la revendication 1, dans lequel l'eau provenant du premier moyen d'alimentation en eau est une eau traitée par l'installation de traitement des eaux usées, une eau avant la désinfection par une cuve de désinfection, si l'installation de traitement des eaux comprend une cuve de désinfection configurée pour désinfecter l'eau provenant du bassin de sédimentation final, et/ou des eaux usées en amont d'une pompe de la station de pompage relais.

3. Procédé de traitement des eaux usées selon la revendication 1 ou 2, dans lequel l'eau provenant du premier moyen d'alimentation en eau contient les nutriments nécessaires à la germination des spores.

4. Procédé de traitement des eaux usées selon l'une quelconque des revendications 1 à 3 précédentes, dans lequel les microbes aérobies comprennent les bactéries Gram positif appartenant à la classe des Cloroflexales de l'embranchement de Chloroflexi.

5. Procédé de traitement des eaux usées selon la revendication 1, dans lequel, lorsque l'installation de traitement des eaux usées comprend le bassin de sédimentation initial, l'eau à fournir au premier et au deuxième dispositif d'activation des microbes correspond au trop-plein du bassin de sédimentation initial, aux eaux usées avant l'entrée dans le bassin de sédimentation initial, à l'eau traitée par l'installation de traitement des eaux usées et/ou à l'eau avant la désinfection par une cuve de désinfection, si l'installation de traitement des eaux usées comprend une cuve de désinfection configurée pour désinfecter l'eau provenant du bassin de sédimentation final.

6. Procédé de traitement des eaux usées selon l'une quelconque des revendications 1 à 5 précédentes, dans lequel l'eau provenant du premier et du deuxième moyen d'alimentation en eau contient les nutriments nécessaires pour la germination des spores.

7. Procédé de traitement des eaux usées selon la revendication 1, 5 ou 6, dans lequel la température de l'eau provenant du premier et du deuxième moyen d'alimentation en eau est maintenue dans l'intervalle de 15°C à 40°C.

8. Procédé de traitement des eaux usées selon l'une quelconque des revendications 1, 5, 6 et 7 précédentes, dans lequel le deuxième moyen d'alimentation en oxygène est configuré pour fournir de l'oxygène aux eaux usées présentes dans la pompe ou aux eaux usées immédiatement après leur évacuation de la pompe au cas où la concentration en oxygène des eaux usées est considérée comme suffisante pour la germination des spores, de l'air peut être introduit.

9. Procédé de traitement des eaux usées selon l'une quelconque des revendications 1 à 8 précédentes, dans lequel l'oxygène provenant du premier et du deuxième moyen d'alimentation en oxygène est alimenté sous forme d'air.

10. Procédé de traitement des eaux usées selon l'une quelconque des revendications 1 à 9 précédentes, dans lequel la matière microbienne contient de la matière organique décomposée.
